# EUROPEAN PATENT APPLICATION

(11) **EP 1 909 366 A1**
(43) Date of publication of application: **09.04.2008**
(21) Application number: 06768106.4
(22) Date of filing: 11.07.2006
(51) Int. Cl.: H01S 5/022, B29C 65/16, G02B 6/42

(54) **LIGHT IRRADIATING DEVICE AND WELDING METHOD**

(30) Priority: 13.07.2005 JP 2005204817
(71) Applicant: The Furukawa Electric Co., Ltd., Chiyoda-ku, Tokyo 100-8322 (JP); Ube Industries, Ltd., Ube City, Yamaguchi 755-8633 (JP); Rex Industries Co., Ltd., Osaka-shi, Osaka 542-0086 (JP)
(72) Inventor: TANAKA, Kanji, c/o The Furukawa Electric Co., Ltd., Tokyo 100-8322 (JP); FUJISAKI, Akir, c/o The Furukawa Electric Co., Ltd., Tokyo 100-8322 (JP); UEDA, Junji, c/o UBE Industries, Ltd., Yamaguchi 755-8633 (JP); FUKUNAGA, Masahiro, c/o UBE Industries, Ltd., Yamaguchi 755-8633 (JP); NAKAMURA, Koji, c/o UBE Industries, Ltd., Yamaguchi 755-8633 (JP); AKAGAWA, Yoshifumi, c/o UBE Industries, Ltd., Yamaguchi 755-8633 (JP); AZUMA, Jiro, c/o REX Industries Co., Ltd., Osaka-shi, Osaka 578-0948 (JP); IKENAKA, Yoshiharu, c/o REX Industries Co., Ltd., Osaka-shi, Osaka 578-0948 (JP)
(74) Representative: Schwabe - Sandmair - Marx
(86) International application number: PCT/JP2006/313793
(87) International publication number: WO 2007/007766

(57) **Abstract**

To obtain a light output having a desired light intensity profile suitable for purposes such as increasing of a welding area without increasing light-emission intensity more than necessary. Light beams emitted from a plurality of emission facets 115 arranged on an emission surface 114 of a light source unit 122 are focused into a single light beam by a condenser lens and irradiated on a target object to be irradiated. The single light beam irradiated on the target object obtains the desired light intensity profile according to a combination of positions where the emission facets 115 are arranged and intensity distributions of the light beams emitted from the emission facets 115. Consequently, it is possible to realize the desired light intensity profile required for output a single light beam according to an arrangement setting of the emission facets 115 and a setting and variable control of the intensity distributions of the emission facets 115.

## Description

### TECHNICAL FIELD

The present invention relates to, for example, a light irradiating apparatus suitable for a resin-welding light irradiating apparatus that irradiates an infrared laser beam to weld resin members and a welding method using the light irradiating apparatus.

### BACKGROUND ART

Conventionally, methods of bonding resin members to each other include a method of bonding resin members using an adhesive and other welding methods such as heat plate welding, vibration welding, ultrasonic welding, and spin welding. Recently, a laser welding method having an advantage that, for example, there is no influence on a filler and no worry about scratches on a product has been known.

The laser welding method is a welding method of welding resin members by bringing a resin member that is non-absorptive (transparent) to a laser beam and a resin member that is absorptive (non-transparent) to the laser beam into contact with each other. More specifically, the method employs irradiating a bonding surface with a laser beam from a non-absorptive resin member side to heat and melt an absorptive resin member that forms the bonding surface, with energy of the laser beam and heating and melting the bonding surface of the non-absorptive resin member with heat conduction from the bonding surface of the absorptive resin member to thereby integrally bond the bonding surfaces to each other (see, for example, Patent Document 1). Therefore, if the energy of the laser beam is sufficiently absorbed in the bonding surfaces of the non-absorptive resin member and the absorptive resin member to sufficiently heat and melt the bonding surfaces, high bonding strength can be obtained.

Patent Document 2 discloses a technology for, to efficiently input a laser beam from a semiconductor laser array having a two-dimensional array structure to an optical fiber and efficiently output the laser beam from the optical fiber, collimating a laser beam emitted from a stack-type semiconductor laser array having a large number of light-emitting points arrayed in a matrix shape with a collimating lens, condensing the laser beam in both vertical and horizontal directions with a condenser lens, condensing and making the laser beam incident on input facets arrayed in a matrix shape of an optical fiber array having optical fibers smaller in number than the light-emitting points, and binding the optical fibers as a bundle.

Patent Document 1: Japanese Patent Application Laid-Open No. S60-214931
Patent Document 2: Japanese Patent Application Laid-Open No. 2000-98191

### DISCLOSURE OF INVENTION

### PROBLEM TO BE SOLVED BY THE INVENTION

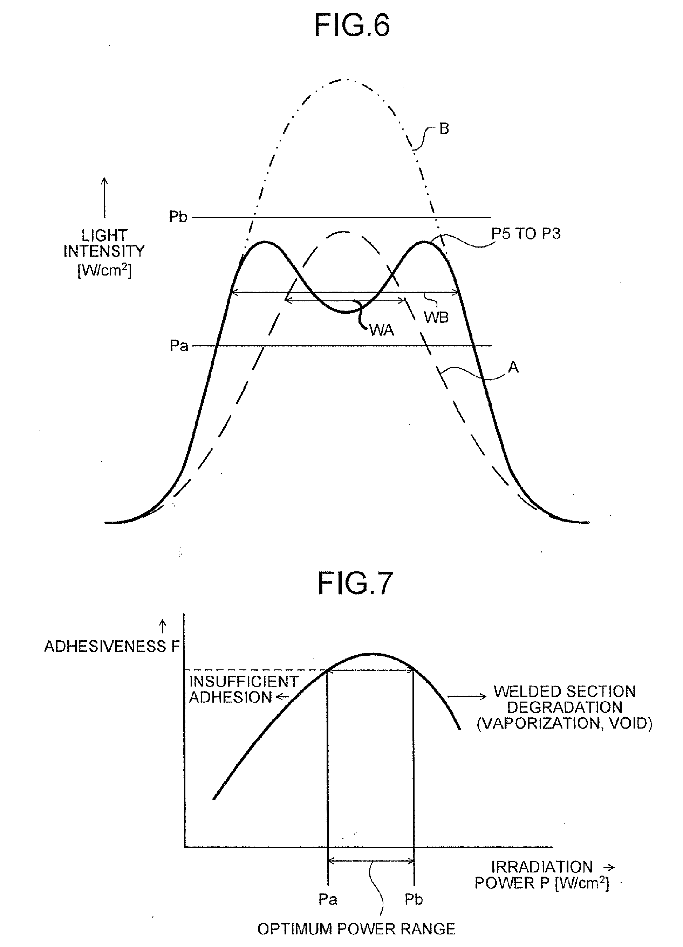

In the conventional laser welding method disclosed in Patent Document 1 and the like, a light intensity profile of the laser beam condensed and irradiated on the bonding surfaces is, for example, a profile having high intensity in the center of the profile as indicated by a broken line A in Fig. 6 (in general, referred to as Gaussian distribution characteristic). In the irradiation of the laser beam having such a profile, when it is attempted to improve bonding strength by increasing a welding area (welding scanning width) from width W_{A} to width W_{B}, it is inevitable to increase light-emission power of the laser beam to obtain, for example, a light intensity profile indicated by a dash-dot-dotted line B in Fig. 6. However, a simple increase of the light-emission power of the irradiated laser beam does not lead to an increase of adhesiveness. Only the temperature near the center of the bonding surfaces increase and a resin material evaporates and vaporizes or changes to a void (bubble) state to cause degradation of a quality. Thus, on the contrary, the bonding strength decreases.

In the technology disclosed in Patent Document 2, for example, when the semiconductor laser is used as an pumping light source of a solid-state laser, an increase in power of a laser beam used for pumping is indispensable. However, because a semiconductor laser with a single light-emission point has a limit in power intensity, in an attempt to realize a further increase in power, the optical fibers are bound and light power is condensed to obtain higher light intensity. Therefore, even if the technology disclosed in Patent Document 2 is applied to the field of laser welding and the like, light intensity of an irradiated laser beam can be merely increased, which cannot solve the problem in Patent Document 1 in increasing the welding area.

When a laser beam is scanned to perform linear or curved resin welding, it is necessary to take into account an integral value of a passing beam rather than an instantaneous beam profile. A method of decreasing scan speed to enlarge the welding area is also conceivable. However, when a beam having a profile with high center intensity is scanned, it is likely that integrated intensity in the center further increases. Therefore, the problem of the increase in only the temperature in the center is highlighted. However, in the conventional laser welding method, the integrated intensity is not specifically taken into account.

When the resin is welded, regardless of presence or absence of scanning of a laser beam, a profile exhibiting two peaks in which light intensity is low near the center of the profile and high around the center may be preferable. In particular, when thermal conductivity of resin is low, whereas heat given to the periphery of the resin easily escapes, heat in the center less easily escapes. Therefore, even when a laser beam with a flat beam profile is irradiated on the resin, in some cases, the temperature in the center rises and degradation in the center area is observed. However, in the conventional laser welding method, a reduction in laser beam intensity in the center is not specifically taken into account.

In the conventional laser welding apparatus, when a laser is an invisible light, for example, an infrared light, a visible light for grasping an irradiation position is simultaneously input as a guide light. However, a beam profile of the visible light does not reflect a beam profile of an actual laser beam. Therefore, to look at the profile of the actual laser beam, it is necessary to measure the profile with a beam profiler or a laser detection card and the like are necessary.

The present invention has been devised in view of the above description and it is an object of the present invention to provide a light irradiating apparatus and a welding method that can obtain a light output of a desired light intensity profile suitable for purposes such as increasing of a welding area without increasing light-emission intensity more than necessary.

### MEANS FOR SOLVING PROBLEM

To solve the above problems and to achieve the object, a light irradiating apparatus according to claim 1 includes a light source unit including an emission surface and a plurality of point light sources arranged on the emission surface; and an optical system that focuses a plurality of light beams emitted from the point light sources into a single light beam and irradiates a target object to be irradiated with the single light beam. The single light beam is obtained with a desired light intensity profile according to a combination of positions where the point light sources are arranged and intensity distributions of the light beams emitted from the point light sources.

In the light irradiating apparatus according to claim 2, the light source unit includes a plurality of light-emission sources and a plurality of optical fibers for propagating lights from the light-emission sources, and the point light sources are formed with emission facets of the optical fibers that are arranged on the emission surface of the light source unit and that propagate and emit the lights from the light-emission sources.

In the light irradiating apparatus according to claim 3, the point light sources are arrayed on the emission surface in a predetermined positional relation.

In the light irradiating apparatus according to claim 4, the point light sources are arranged in positions on an identical circle.

In the light irradiating apparatus according to claim 5, the point light sources are multiply arranged in a doughnut shape in positions on concentric circles.

In the light irradiating apparatus according to claim 6, the point light sources are arranged in positions on an identical straight line.

In the light irradiating apparatus according to claim 7, the point light sources are multiply arranged in positions on a plurality of straight lines.

In the light irradiating apparatus according to claim 8, the point light sources emit light beams having predetermined intensity distributions set in advance to obtain the desired light intensity profile.

In the light irradiating apparatus according to claim 9, the point light sources are grouped according to positions where the point light sources are arranged, and emit light beams having predetermined intensity distributions set in advance to obtain the desired light intensity profile in units of a group of point light sources.

The light irradiating apparatus according to claim 10 further includes a control unit that variably controls intensity distributions of the light beams emitted from the point light sources such that the desired light intensity profile is obtained.

The light irradiating apparatus according to claim 11 further includes a control unit that variably controls intensity distributions of the light beams emitted from the point light sources such that light intensity distributions of light beams emitted from point light sources arranged in positions on an outer concentric circle is larger than intensity distributions of light beams emitted from point light sources arranged in positions on an inner concentric circle.

In the light irradiating apparatus according to claim 12, the point light sources are grouped according to positions where the point light sources are arranged, and the control unit variably controls the intensity distributions of the light beams emitted from the point light sources in units of a group of point light sources.

In the light irradiating apparatus according to claim 13, the desired light intensity profile is a profile exhibiting two intensity peaks in which light intensity is low near a center of the profile and light intensity is high around the center.

In the light irradiating apparatus according to claim 14, the desired light intensity profile is a flat profile in which light intensity is flat near a center of the profile.

In the light irradiating apparatus according to claim 15, the desired light intensity profile is a profile exhibiting two intensity peaks in which integrated intensity obtained when the light beams are scanned with respect to an arbitrary axis is low near a center of the profile and light intensity is high around the center.

In the light irradiating apparatus according to claim 16, the desired light intensity profile is a flat profile in which integrated intensity obtained when the light beams are scanned with respect to an arbitrary axis is flat near a center of the profile.

In the light irradiating apparatus according to claim 17, the light source unit further includes a point light source for guide light that irradiates a visible light on the target object.

In the light irradiating apparatus according to claim 18, the point light source for guide light is arranged in a center position of the point light sources on the emission surface.

In the light irradiating apparatus according to claim 19, a plurality of the point light sources for guide light are arranged in positions indicating a contour of the desired light intensity profile on the emission surface.

In the light irradiating apparatus according to claim 20, the light beams emitted from the point light sources are infrared laser beams, and the target object is a resin member, a bonding surface of which is welded by irradiation of the light beam having the desired light intensity profile.

A welding method according to claim 21 uses the light irradiating apparatus according to any one of claims 1 to 19. The light beams emitted from the point light sources are infrared laser beams. The target object is a resin member, a bonding surface of which is welded by irradiation of the light beam having the desired light intensity profile.

### EFFECT OF THE INVENTION

In the light irradiating apparatus and the welding method according to the present invention, light beams emitted from the point light sources arranged on the emission surface of the light source unit are condensed into a single light beam by the optical system on target objects to be irradiated. The single light beam irradiated on the target objects obtains a desired light intensity profile according to a combination of positions where the respective point light sources are arranged and an intensity distribution of light beams emitted from the respective point light sources. Therefore, the desired light intensity profile required of the one output light beam can be realized by a setting of an arrangement of the point light sources and a setting and variable control of the light intensity distribution of the respective point light sources. Consequently, there is an effect that it is possible to obtain, without increasing light-emission intensity more than necessary, a light output of a desired light intensity profile suitable for purposes such as increasing of a welding area, for example, a profile exhibiting two peaks in which light intensity is low near the center of the profile and high around the center or a profile exhibiting flatness in which light intensity is flat near the center. Moreover, there is also an effect that, when a laser beam is scanned to perform linear or curved resin welding, it is possible to change integrated intensity in a scan direction and a vertical direction to be flat or bimodal. Because the point light sources for guide light are arranged in positions indicating a contour of the desired light intensity profile, there is also an effect that it is possible to recognize a profile shape with the guide light.

### BRIEF DESCRIPTION OF DRAWINGS

[Fig. 1] Fig. 1 is a schematic perspective view of an example of the structure of a light irradiating apparatus for resin welding according to an embodiment of the present invention.
[Fig. 2] Fig. 2 is a schematic side view of a more detailed example of the structure.
[Fig. 3] Fig. 3 is a front view an example of an arrangement of emission facets of a plurality of optical fibers on an emission surface of a multi-core capillary and a dimensional relation among the emission facets.
[Fig. 4] Fig. 4 is a characteristic chart of a state of a change in a light intensity profile of a single light beam condensed and irradiated on bonding surfaces by a condenser lens when an intensity distribution on an outer side is fixed and an intensity distribution on an inner side is varied.
[Fig. 5] Fig. 5 is a diagram for explaining, with an example of a calculation result, a state of a light intensity profile viewed on an X-Y two-dimensional coordinate surface in the case of a characteristic P5 exhibiting bimodality.
[Fig. 6] Fig. 6 is a diagram for explaining a relation between a light intensity profile and a scanning width.
[Fig. 7] Fig. 7 is of graph of an irradiation power P-adhesiveness F characteristic.
[Fig. 8] Fig. 8 is a diagram for explaining directions of scan with respect to an arrangement of emission facets.
[Fig. 9] Fig 9 is a characteristic graph of an integrated intensity distribution in axial positions perpendicular to scan directions.
[Fig. 10] Fig. 10 is a front view of a modification of the arrangement of the emission facets.
[Fig. 11] Fig. 11 is a front view of another modification of the arrangement of the emission facets.
[Fig. 12] Fig. 12 is a front view of still another modification of the arrangement of the emission facets.
[Fig. 13] Fig. 13 is a front view of still another modification of the arrangement of the emission facets.
[Fig. 14] Fig. 14 is a front view of still another modification of the arrangement of the emission facets.

### EXPLANATIONS OF LETTERS OR NUMERALS

- 101, 102: Resin member
- 103a, 103b: Bonding surface
- 112: Condenser lens
- 113: Optical fiber
- 114: Emission surface
- 115: Emission facet
- 121: Semiconductor laser
- 122: Light source unit
- 123: Control unit

### BEST MODE(S) FOR CARRYING OUT THE INVENTION

Best modes for carrying out the present invention are explained with reference to the drawings. A light irradiating apparatus according to an embodiment of the present invention explained below indicates an example of application to a light irradiating apparatus for resin welding that irradiates an infrared laser beam on bonding surfaces of resin members as objects to be irradiated to weld the resin members. However, a light irradiating apparatus according to the present invention is not limited to the resin member welding and is also applicable to, for example, welding of metals. A light beam to be used is not limited to the infrared laser beam.

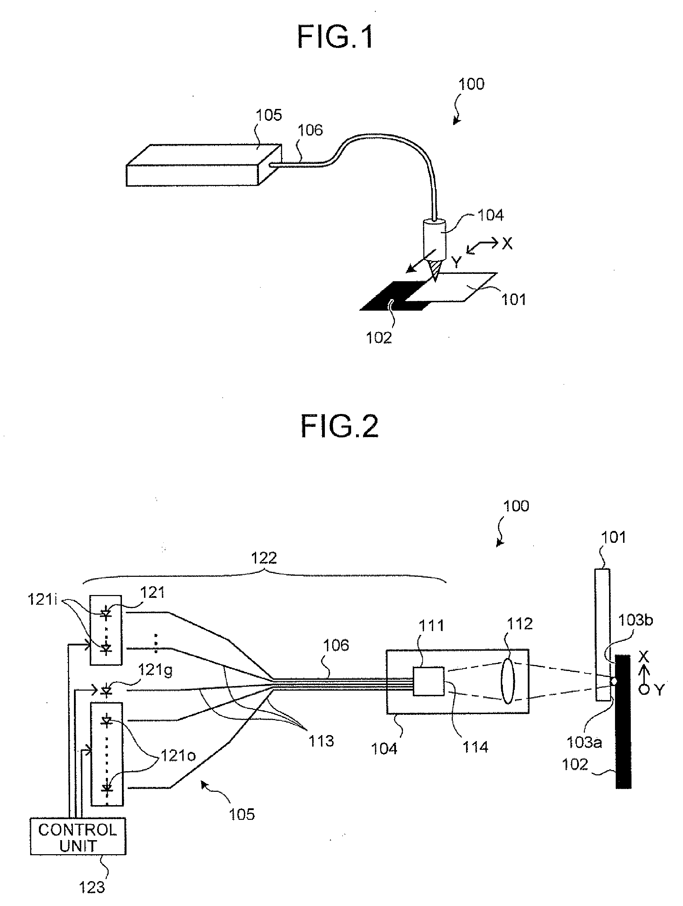

Fig. 1 is a schematic perspective view of an example of the structure of the light irradiating apparatus for resin welding according to the present embodiment. Fig. 2 is a schematic side view of a more detailed example of the structure. A light irradiating apparatus 100 for resin welding according to the present embodiment includes a laser head 104 that scans, while condensing and irradiating an infrared laser beam on bonding surfaces 103a and 103b of resin members 101 and 102 loaded on a work (not shown) and superimposed one on top of the other, the bonding surfaces 103a and 103b relatively in a Y-axis direction, a laser main body 105 that supplies the infrared laser beam emitted from the laser head 104, and a fiber guide 106 that flexibly connect the laser main body 105 and the laser head 104 and propagates the infrared laser beam.

The resin member 101 located on an incidence side of the infrared laser beam may be any kind of resin as long as the resin exhibits transparency to an incident laser beam. Examples of the resin include polyamide, polyethylene, polypropylene, and styrene-acrylonitrile copolymer. When necessary, resin added with reinforcing fiber such as glass fiber or carbon fiber may be used. On the other hand, the resin member 102 located on an inner side with respect to the incident infrared laser beam may be any kind of resin as long as the resin exhibits absorptiveness to the incident laser beam. The resin members 101 and 102 independently have desired characteristics. Besides, for example, an additive exhibiting absorptiveness to a laser beam may be dispersed in the resin member 102 or absorptive paint may be applied to the surface thereof. Moreover, absorptive resin may be sandwiched between the resin members 101 and 102. As a specific example of such resin members 101 and 102, for example, those disclosed in Japanese Patent Application Laid-Open No. 2004-299395 and Japanese Patent Application Laid-Open No. 2004-299395 can be suitably used. As an example, in the present embodiment, resin such as polyamide or polypropylene is used for the resin members 101 and 102. Carbon black for absorbing a laser beam is included in the resin member 102.

Therefore, as in the case of Patent Document 1, a laser welding method according to the present embodiment has a principle of condensing and irradiating an infrared laser beam on the bonding surfaces 103a and 103b from the non-absorptive resin member 101 side with the laser head 104 to heat and melt the absorptive resin member 102, which forms the bonding surface 103b, with energy of the infrared laser beam and heating and melting the bonding surface 103a of the non-absorptive resin member 101 with heat conduction from the bonding surface 103b of the absorptive resin member 102 to thereby integrally bond the bonding surfaces 103a and 103b to each other.

The laser head 104 includes, as shown in Fig. 2, a multi-core capillary 111 and a condenser lens 112 forming an optical system that focuses light beams of a plurality of infrared laser beams emitted from the multi-core capillary 111 into a single light beam and condenses and irradiates the light beam on the bonding surfaces 103a and 103b. A condensing spot diameter of the condenser lens 112 is varied by changing a distance between the condenser lens 112 and a work. However, even if a condensing position is changed, a light intensity profile in focusing the light beams of the infrared laser beams emitted from the multi-core capillary 111 into a single light beam is maintained.

The multi-core capillary 111 is a capillary of a columnar shape in which an optical fiber 113 is inserted in each of a plurality of optical fiber insertion holes. When necessary, the multi-core capillary 111 is combined with a cylindrical sleeve to be formed as a multi-core ferrule of a cylindrical shape or a square shape. As the ferrule in this case, a zirconia ferrule, a glass ferrule, a metal ferrule, or the like is used as appropriate.

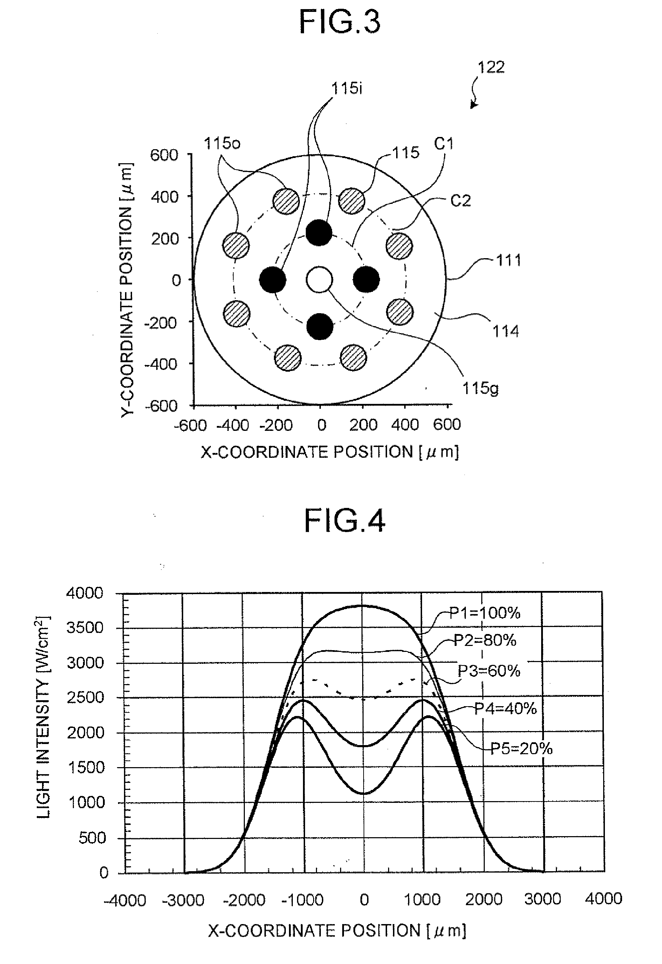

Fig. 3 is a front view of an example of an arrangement of emission facets 115 of a plurality of the optical fibers 113 on an emission surface 114 of the multi-core capillary 111 and a dimensional relation among the emission facets 115. The emission facets 115 of the optical fibers 113 are arrayed and arranged on the emission surface 114 of the multi-core capillary 111 in a predetermined positional relation. In the present embodiment, as an example, when an inner concentric circle C1 and an outer concentric circle C2 having an optical axis of the condenser lens 112 as the center are assumed, in positions on the respective concentric circles C1 and C2, the emission facets 115 are multiply arranged in a doughnut shape by being arranged in positions obtained by equally dividing the respective concentric circles C1 and C2. More specifically, in positions on the inner concentric circle C1, inner emission facets 115i are arranged as indicated by black circles in four positions obtained by equally dividing the concentric circle C1 into four. Therefore, when these four inner emission facets 115i are connected by straight lines, a regular square is formed. In positions on the outer concentric circle C2, outer emission facets 115o are arranged as indicated by hatched circles in eight positions obtained by equally dividing the concentric circle C2 into eight. Therefore, when these eight outer emission facets 115o are connected by straight lines, a regular octagon is formed. The outer emission facets 115o on the outer concentric circle C2 are set to be appropriately shifted from the inner emission facets 115i on the inner concentric circle C1 to be prevented from being placed in positions on an identical radius. Moreover, an emission facet for guide light 115g is arranged as indicated by a white circle in an optical axis center position.

Incidence sides of the optical fibers 113 inserted in the multi-core capillary 111 are drawn into the laser main body 105 through the fiber guide 106 and optically coupled to respective semiconductor lasers 121 as light-emission sources provided in the laser main body 105. One of a plurality of the semiconductor lasers 121 is set as a semiconductor laser 121g for an optical fiber corresponding to the emission facet for guide light 115g.
In association with the emission facets 115i and 115o grouped according to the positions arranged as indicated by the black circles and the hatched circles, the semiconductor lasers 121 are also grouped as inner semiconductor lasers 121i and outer semiconductor lasers 121o.

In the present embodiment, a plurality of the inner semiconductor lasers 121i and a plurality of the outer semiconductor lasers 121o, the optical fibers 113 that propagate light (infrared laser beams) from the inner semiconductor lasers 121i and the outer semiconductor lasers 121o, and the multi-core capillary 111 form a light source unit 122. The emission facets 115i and 115o of the optical fibers 113 on the emission surface 114 of the multi-core capillary 111 form a plurality of point light sources. The emission facet for guide light 115g forms a point light source for guide light.

The laser main body 105 includes a control unit 123 that controls light-emission power and the like of the semiconductor lasers 121. The control unit 123 is adapted to control light-emission power of the respective semiconductor lasers in units of the grouped inner semiconductor lasers 121i and outer semiconductor lasers 121o. Consequently, an intensity distribution of light beams emitted from the emission facets 115i and 115o is also controlled in units of the grouped emission facets.

An example of a specific structure of the present embodiment is explained. As an example, semiconductor lasers that emit infrared laser beams having light-emission power of 5 W and a wavelength of 915 nanometers are used as the inner semiconductor lasers 121i and the outer semiconductor lasers 121o. Multi-mode fibers having a core diameter of 105 micrometers and a clad diameter of 125 micrometers are used as the optical fibers 113. The emission facets 115i and 115o of the optical fibers 113 are arranged on an X-Y two-dimensional coordinate surface at intervals of 250 micrometers as shown in Fig. 3. A semiconductor laser that emits red light having a wavelength of 650 nanometers is used as the semiconductor laser 121g.

Fig. 4 is a characteristic chart of a state of a change in a light intensity profile of a single light beam condensed and irradiated on the bonding surfaces 103a and 103b by the condenser lens 112 when an intensity distribution on the outer semiconductor lasers 121o (the outer emission facets 115o) side is fixed at 5 W and an intensity distribution on the inner semiconductor lasers 121i (the inner emission facets 115i) side is varied from 1 W to 5 W by the control unit 123 in the example of the specific structure described above.

According to the characteristic chart shown in Fig. 4, it is seen that it is possible to change the light intensity profile of a single light beam condensed and irradiated on the bonding surfaces 103a and 103b by the condenser lens 112 according to a combination of the positions where the emission facets 115 are arranged and an intensity distribution of light beams emitted from the emission facets 115. When an inner intensity distribution is set to 100% (=5 W) with respect to an outer intensity distribution, a light intensity profile close to the Gaussian distribution is obtained as indicated by a characteristic P1. When an inner intensity distribution is set to 80% (=4 W) with respect to an outer intensity distribution, a light intensity profile exhibiting flatness in which light intensity is flat near the center thereof is obtained as indicated by a characteristic P2. Moreover, when an inner intensity distribution is reduced to 60% (=3 W), 40% (=2 W), and 20% (=1 W) with respect to an outer intensity distribution, a light intensity distribution profile exhibiting bimodality in which light intensity is low near the center and high around the center is obtained as indicated by characteristics P3, P4, and P5, respectively. As the inner intensity distribution is lower, a concavity in the center of bimodality is larger.

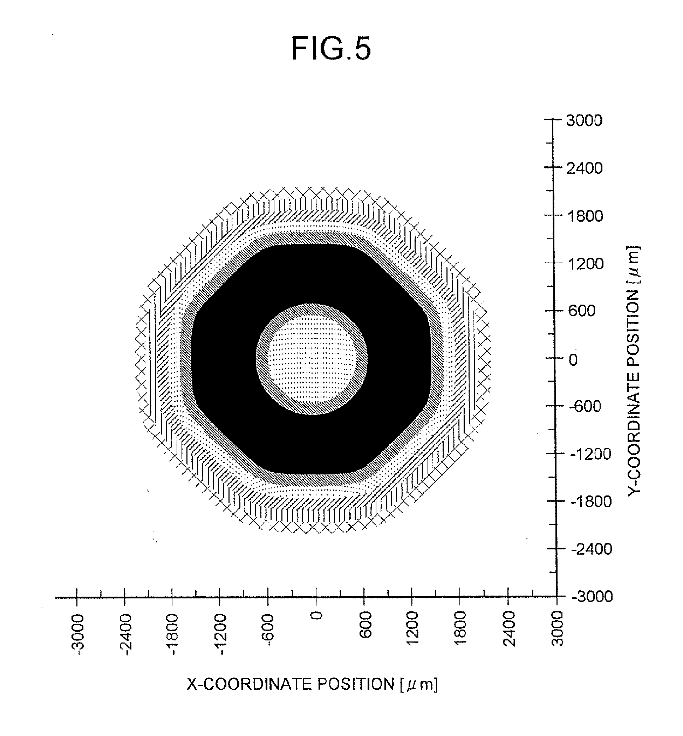

Fig. 5 is a diagram for explaining, with an example of a calculation result, a state of a light intensity profile viewed on an X-Y two-dimensional coordinate surface (equivalent to the bonding surfaces 103a and 103b) in the case of a characteristic P5 exhibiting bimodality. A denser (blacker) section exhibits higher light intensity. In a plane view, it is seen that light intensity near the center is low and light intensity becomes higher in a doughnut shape around the center.

Light intensity profiles of the characteristics P3 to P5 exhibiting bimodality that are possible according to a combination of the positions where the emission facets 115 are arranged and an intensity distribution of light beams emitted from the emission facets 115 according to the present embodiment is considered with reference to Fig. 6. In the conventional case, when it is attempted to improve bonding strength by increasing a welding area (welding scanning width) from width W_{A} to width W_{B}, as described above, it is inevitable to increase light-emission power of a laser beam to obtain, for example, a light intensity profile indicated by an alternate long and two short dashes line B in Fig. 6. It is seen that, according to the light intensity profiles of the characteristics P3 to P5 exhibiting bimodality in the present embodiment, it is possible to increase the welding area (welding scanning width) to the width W_{B} without substantially increasing the light-emission power of the laser beam.

In particular, in laser welding, as indicated by an irradiation power P-adhesiveness F characteristic in Fig. 7, there is a characteristic that, when the irradiation power P is equal to or lower than a threshold Pa, adhesion is insufficient and, on the other hand, when the irradiation power P is increased to be equal to or higher than a threshold Pb, only degradation in a welded section such as vaporization or void occurs, satisfactory bonding strength is not obtained, and, eventually, a range from the threshold Pa to the threshold Pb is an optimum power range. In this regard, according to the light intensity profiles of the characteristics P3 to P5 exhibiting bimodality in the present embodiment, as indicated by a solid line in Fig. 6, it is possible to increase the welding area (welding scanning width) to the width WB in a range not exceeding the threshold Pb and improve the bonding strength.

In the case of a light intensity distribution profile exhibiting flatness in which light intensity is flat near the center thereof as indicated by the characteristic P2, it is possible to increase a welding area without substantially increasing light-emission power in spot welding, which does not involve scanning, and improve bonding strength.

In some case, even if a laser beam having a flat beam profile is irradiated, the temperature in the center rises and degradation in the center is observed. This is considered to be because, when thermal conductivity of resin is small, whereas heat given to the periphery thereof easily escapes, heat in the center thereof less easily escapes and the temperature rises. According to the light intensity profiles of the characteristics P3 to P5 exhibiting bimodality in Fig. 4 according to the present embodiment, even when resin having low thermal conductivity is welded, it is possible to increase a welding area and improve welding strength.

Therefore, for example, such a characteristic P5 exhibiting bimodality is set as a desired light intensity profile and an infrared laser beam having the light intensity profile of the characteristic P5 is irradiated on the bonding surfaces 103a and 103b to scan the bonding surfaces 103a and 103b in the Y-axis direction. Consequently, unlike the cases of the characteristic P1 and the characteristic P2, an intensity distribution is not high only in the center in the welding scanning width. It is possible to satisfactorily perform resin welding under a substantially uniform intensity distribution over the entire welding scanning width.

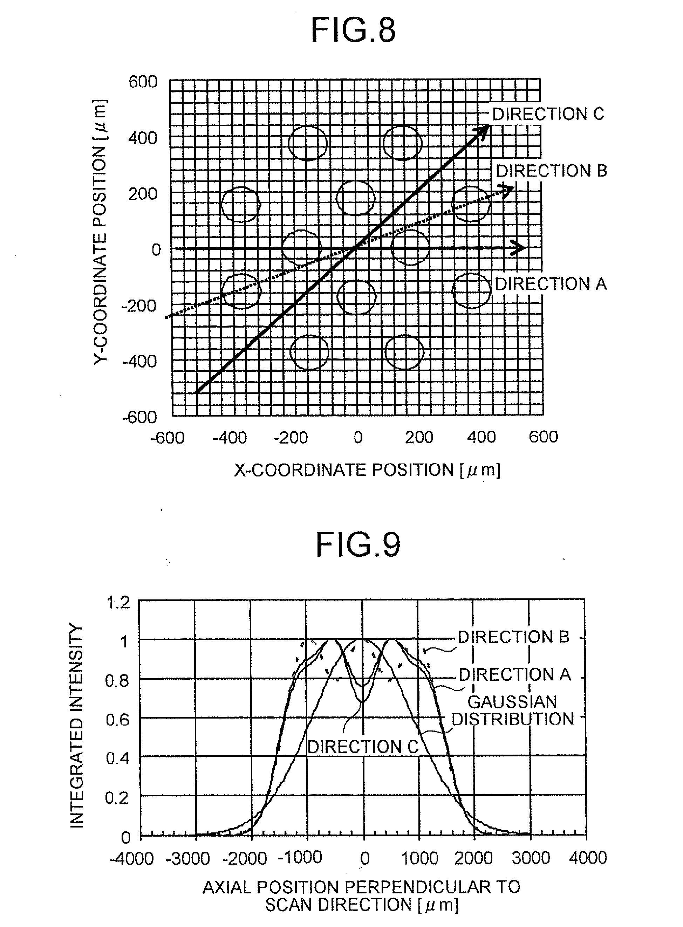

Moreover, in the above explanation, when a laser beam is scanned, a scanning direction is fixed. However, it is possible to eliminate scanning directional properties by optimizing a ratio of light intensity in an arrangement shown in Fig. 8. Fig. 9 is a diagram of an example of the ratio of light intensity. In Fig. 8, inner light intensity is set to 30% of outer light intensity. Directions A, B, C shown in Fig. 8 are shifted by 22.5 degrees and 45 degrees at which directional properties are most different because this arrangement is a regular octagon on the outer side and a regular square on the inner side. It is seen that, as shown in Fig. 9, beam profiles of all A, B, and C are widened compared with integrated intensity of a normal laser beam of a Gaussian distribution shape. For example, it is seen that, when ranges having intensity equal to or larger than 70% of maximum intensity are compared, whereas the range is 1530 micrometers for the normal laser beam, the range is increased by 1.75 times to 2670 micrometers in both the directions A and B and increased by 1.57 times to 2400 micrometers in the direction C. Therefore, even when a laser beam is scanned in an arbitrary direction, it is possible to realize a profile in which integrated intensity is relatively flat near a peak. Unlike the Gaussian distribution shape, intensity distribution is not high only in the center of the welding scanning width. It is possible to perform satisfactory resin welding under a substantially uniform intensity distribution over the entire welding scanning width. Moreover, according to this structure, even in the case of welding of resin having low thermal conductivity, it is possible to obtain an integrated intensity profile having bimodality and improve welding strength by increasing a welding area.

As described above, according to the present embodiment, light beams emitted from the emission facets 115 arranged on the emission surface 114 are focused into a single light beam by the condenser lens 112 and irradiated on the bonding surfaces 103A and 103b. The single light beam irradiated on the bonding surfaces 103A and 103b obtains a desired light intensity profile according to a combination of positions where the respective emission facets 115 are arranged and an intensity distribution of light beams emitted from the respective emission facets 115. Therefore, the desired light intensity profile required of the one output light beam can be realized by a setting of an arrangement of the emission facets 115 and variable control of the light intensity distribution of the respective emission facets 115. Therefore, it is possible to obtain, without increasing light-emission intensity more than necessary, a light output of a desired light intensity profile suitable for purposes such as an increase in a welding area, for example, a profile exhibiting bimodality in which light intensity is low near the center thereof and high around the center or a profile exhibiting flatness in which light intensity is flat near the center thereof. Furthermore, it is also possible to realize a desired light intensity profile suitable for purposes such as an increase in a welding area, for example, a profile exhibiting bimodality in which light intensity is low near the center thereof and light intensity is high around the center or a profile exhibiting flatness in which light intensity is flat near the center thereof, not only for a spot welding but also for an integral of an intensity profile in a scanning.

In this case, although an infrared laser beam irradiated on the bonding surfaces 103a and 103b are invisible, the emission facet for guide light 115g that emits red light is provided in the center position of the emission facets 115i and 115o to simultaneously irradiate the led light on the bonding surfaces 103a and 103b. This makes it easy to visually check a welding position.

In the present embodiment, the control unit 123 is provided to variably control at least one of light intensities of light beams emitted from the emission facets 115i and 115o (the semiconductor lasers 121i and 121o). However, it is also possible that, without using a control system by the control unit 123, when, for example, a desired welding area (welding scanning width) is known as a welding condition, a light beam having light intensity designed in advance to obtain a desired light intensity profile suitable for the welding area is emitted. This can also be realized easily if a light beam of a desired intensity distribution set in advance in units of the grouped emission facets 115i and 115o according to positions where the emission facets 115i and 115o area arranged to obtain a desired light intensity profile is emitted.

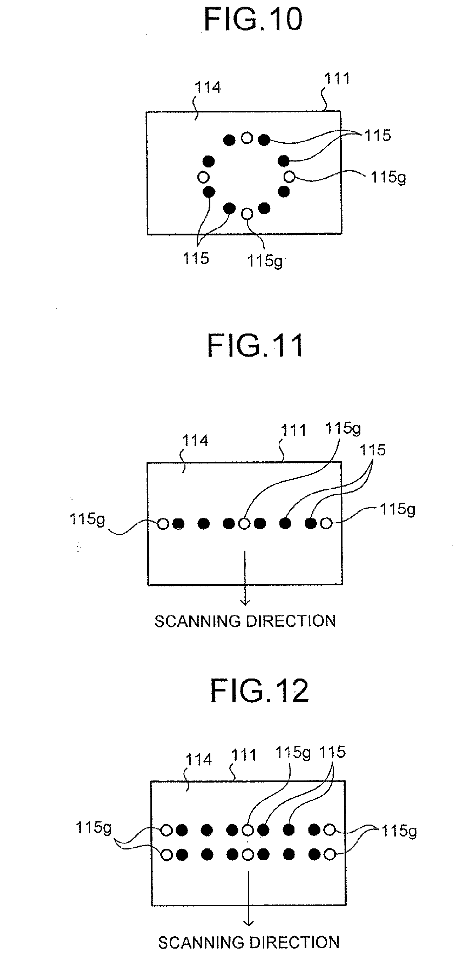

The emission facets 115i and 115o are not limited to the multiple arrangement of a doughnut shape on the inner and outer peripheral concentric circles and may be arranged, for example, in one-fold in positions on an single identical concentric circumference as indicated by black circles in Fig. 10. In this case, the emission facet for guide light 115g may be arranged in the center position. However, as shown in the figure, a plurality of the emission facet for guide light 115g may be arranged in positions on a circumference identical with a circumference on which the emission facets 115 are arranged, i.e., positions indicating a contour of a desired light intensity profile. In the example shown in the figure, one emission facet for guide light 115g is arranged for each of two emission facets 115 (the same applies in the case of Fig. 3). Consequently, it is possible to visually recognize a spot diameter for welding with red light during welding and easily check a range in which welding is possible (welding scanning width).

Moreover, examples of the arrangement of the emission facets 115 are not limited to the arrangements in positions on circumferences shown in Figs. 3 and 10. For example, as indicated by black circles in Fig. 11, the emission facets 115 may be one-dimensionally arranged in positions on an identical straight line. As indicated by black circles in Fig. 12, the emission facets 115 may be multiply arranged in positions on a plurality of straight lines, e.g., two straight lines, respectively. In the cases of Figs. 11 and 12, a light beam condensed and irradiated on the emission facets 115 can be formed in a light intensity profile horizontally long and flat over an arrangement range of the emission facets 115 in the figures. Thus, it is possible to widely perform laser welding that involves scanning in a direction indicated by an arrow. In this case, the emission facet for guide light 115g is arranged in the center positions of the emission facets 115 to make it easy to check welding positions. Moreover, the emission facets for guide light 115g are also arranged in positions indicating a contour of the light intensity profile, i.e., in both side positions in the scanning direction to make it easy to check a range in which welding is possible (welding scanning width).

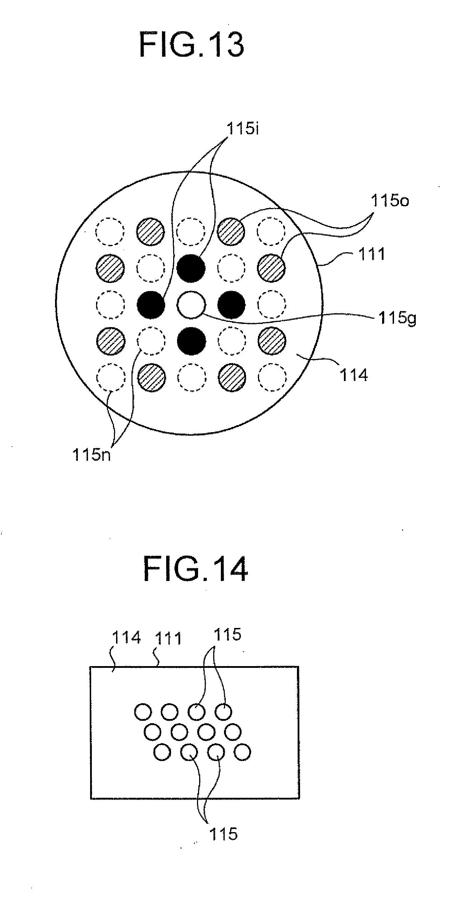

Examples of the arrangement of the emission facets 115 are not limited to the arrangements according to the predetermined positional relations described above.
For example, it is also possible that, as shown in Fig. 13, a large number of the emission facets 115 are densely arrayed over the entire emission surface 114 in a two-dimensional cell shape, bound, and hardened with resin and the emission facets 115 necessary for obtaining a desired light intensity profile for a single light beam by the condenser lens 112 is selected and output. In Fig. 13, all circles indicate the emission facets 115. Among the circles, black circles indicate selected inner emission facets 115i, hatched circles indicate selected outer emission facets 115o, white circles indicate the emission facets for guide light 115g, and broken line circles indicate emission facets 115n not selected. Consequently, it is possible to realize various light intensity profiles.

Moreover, as an example of the arrangement of the emission facets 115, as shown in Fig. 14, the emission facets 115 may be arranged in positions on a plurality of straight lines and arranged in a zigzag shape to be prevented from overlapping preceding rows in a direction orthogonal to the straight lines.

Furthermore, in the example explained above, the point light sources arranged on the emission surface 114 are the emission facets 115 of the optical fibers 113. However, light-emission sources such as semiconductor lasers or LEDs may be directly embedded and arranged on the emission surface 114.

The present invention is not limited to the embodiments described above and various modifications of the present invention are possible without departing from the spirit of the present invention.

### INDUSTRIAL APPLICABILITY

As described above, the light irradiating apparatus and the welding method according to the present invention are useful for welding of resin members and, in particular, suitable when an infrared laser beam is used.

## Claims

1. A light irradiating apparatus comprising:
a light source unit including an emission surface and a plurality of point light sources arranged on the emission surface; and
an optical system that focuses a plurality of light beams emitted from the point light sources into a single light beam and irradiates a target object to be irradiated with the single light beam, wherein
the single light beam is obtained with a desired light intensity profile according to a combination of positions where the point light sources are arranged and intensity distributions of the light beams emitted from the point light sources.

2. The light irradiating apparatus according to claim 1, wherein
the light source unit includes a plurality of light-emission sources and a plurality of optical fibers for propagating lights from the light-emission sources, and
the point light sources are formed with emission facets of the optical fibers that are arranged on the emission surface of the light source unit and that propagate and emit the lights from the light-emission sources.

3. The light irradiating apparatus according to claim 1 or 2, wherein the point light sources are arrayed on the emission surface in a predetermined positional relation.

4. The light irradiating apparatus according to claim 3, wherein the point light sources are arranged in positions on an identical circle.

5. The light irradiating apparatus according to claim 3, wherein the point light sources are multiply arranged in a doughnut shape in positions on concentric circles.

6. The light irradiating apparatus according to claim 3, wherein the point light sources are arranged in positions on an identical straight line.

7. The light irradiating apparatus according to claim 3, wherein the point light sources are multiply arranged in positions on a plurality of straight lines.

8. The light irradiating apparatus according to any one of claims 1 to 7, wherein the point light sources emit light beams having predetermined intensity distributions set in advance to obtain the desired light intensity profile.

9. The light irradiating apparatus according to any one of claims 1 to 7, wherein the point light sources are grouped according to positions where the point light sources are arranged, and emit light beams having predetermined intensity distributions set in advance to obtain the desired light intensity profile in units of a group of point light sources.

10. The light irradiating apparatus according to any one of claims 1 to 7, further comprising a control unit that variably controls intensity distributions of the light beams emitted from the point light sources such that the desired light intensity profile is obtained.

11. The light irradiating apparatus according to claim 5, further comprising a control unit that variably controls intensity distributions of the light beams emitted from the point light sources such that light intensity distributions of light beams emitted from point light sources arranged in positions on an outer concentric circle is larger than intensity distributions of light beams emitted from point light sources arranged in positions on an inner concentric circle.

12. The light irradiating apparatus according to claim 10 or 11, wherein
the point light sources are grouped according to positions where the point light sources are arranged, and
the control unit variably controls the intensity distributions of the light beams emitted from the point light sources in units of a group of point light sources.

13. The light irradiating apparatus according to any one of claims 1 to 12, wherein the desired light intensity profile is a profile exhibiting two intensity peaks in which light intensity is low near a center of the profile and light intensity is high around the center.

14. The light irradiating apparatus according to any one of claims 1 to 12, wherein the desired light intensity profile is a flat profile in which light intensity is flat near a center of the profile.

15. The light irradiating apparatus according to any one of claims 1 to 13, wherein the desired light intensity profile is a profile exhibiting two intensity peaks in which integrated intensity obtained when the light beams are scanned with respect to an arbitrary axis is low near a center of the profile and light intensity is high around the center.

16. The light irradiating apparatus according to any one of claims 1 to 13, wherein the desired light intensity profile is a flat profile in which integrated intensity obtained when the light beams are scanned with respect to an arbitrary axis is flat near a center of the profile.

17. The light irradiating apparatus according to any one of claims 1 to 16, wherein the light source unit further includes a point light source for guide light that irradiates a visible light on the target object.

18. The light irradiating apparatus according to claim 17, wherein the point light source for guide light is arranged in a center position of the point light sources on the emission surface.

19. The light irradiating apparatus according to claim 17, wherein a plurality of the point light sources for guide light are arranged in positions indicating a contour of the desired light intensity profile on the emission surface.

20. The light irradiating apparatus according to any one of claims 1 to 19, wherein
the light beams emitted from the point light sources are infrared laser beams, and
the target object is a resin member, a bonding surface of which is welded by irradiation of the light beam having the desired light intensity profile.

21. A welding method using the light irradiating apparatus according to any one of claims 1 to 19, wherein
the light beams emitted from the point light sources are infrared laser beams, and
the target object is a resin member, a bonding surface of which is welded by irradiation of the light beam having the desired light intensity profile.
